(19)

Europäisches
Patentamt
European
Patent Office
Office européen
des brevets

(11) **EP 1 596 101 B1**

(12) **EUROPEAN PATENT SPECIFICATION**

(45) Date of publication and mention
of the grant of the patent:
**16.04.2008  Bulletin 2008/16**

(51) Int Cl.:
***F16H 25/22*** *(2006.01)*

(21) Application number: **05010144.3**

(22) Date of filing: **10.05.2005**

(54) **Mechanism for converting rotary motion into linear motion**

Vorrichtung zur Umwandlung einer rotierenden Bewegung in eine lineare Bewegung.

Mécanisme pour convertir un mouvement rotatif en mouvement linéaire.

(84) Designated Contracting States:
**DE**

(30) Priority: **10.05.2004  JP 2004139914**

(43) Date of publication of application:
**16.11.2005  Bulletin 2005/46**

(73) Proprietor: **Hitachi, Ltd.**
**Tokyo (JP)**

(72) Inventors:
• **Tsubono, Isamu**
**c/o Hitachi, Ltd., Intellectual Property Group**
**Chiyoda-ku,**
**Tokyo 100-8220 (JP)**
• **Yamakado, Makoto**
**c/o Hitachi, Ltd., Intellectual Property Group**
**Chiyoda-ku,**
**Tokyo 100-8220 (JP)**

• **Tamamoto, Junichi**
**c/o Hitachi, Ltd., Intellectual Property Group**
**Chiyoda-ku,**
**Tokyo 100-8220 (JP)**
• **Takahashi, Tooru**
**c/o Hitachi, Ltd., Intellectual Property Group**
**Chiyoda-ku,**
**Tokyo 100-8220 (JP)**

(74) Representative: **Beetz & Partner**
**Steinsdorfstrasse 10**
**80538 München (DE)**

(56) References cited:
**WO-A-01/90599          US-A- 2 525 326**
**US-A- 4 838 103**

EP 1 596 101 B1

**Description**

Background of the Invention

The present invention relates to a mechanism for converting rotary motion into linear motion, in which a kinetic force is converted between rotary motion and linear motion, and more particularly, to a mechanism for converting rotary motion into linear motion, which is high in conversion efficiency and suited to a power steering device.

In recent years, power steering devices constitute an accessory essential to automobiles. In these power steering devices, in place of conventional hydraulic assist type systems, electrically-driven assist type systems have occupied the main stream in recent years to contribute to energy saving.

By the way, with the electrically-driven assist type systems, it is general to use an electric motor for an assist power source. In the case where a steering device, to which an electric motor is applied, is of a rack and pinion system, linear drive forces are necessary, so that a mechanism that converts rotary motion into linear motion, that is, a so-called mechanism for converting rotary motion into linear motion is used.

Besides, in this case, since it is desirable from the miniaturization point of view to use an electric motor having a high rotating speed, a mechanism uniting with a speed reducer is demanded as a mechanism for converting rotary motion into linear motion, and thus, for example, a ball-screw type mechanism for converting rotary motion into linear motion has been conventionally proposed (for example, see JP-A-7-165049).

With the mechanism or device thus proposed, a threaded rod is connected integrally to a rack in a rack and pinion type steering device, a nut meshes with the rod, and the nut is rotated by an electric motor, which constitutes a rotary power source, to thereby cause the rack to make translation (linear movement).

In this case, since the rack is moved an amount corresponding to a lead of the thread when the electric motor is caused to make one revolution, a large reduction ratio is obtained by decreasing a lead angle whereby the electric motor is increased in rotating speed to achieve miniaturization.

Since a large load acts between the thread of the rod and the thread of the nut, a multiplicity of balls are arranged there and circulated to make rolling contact, thus reducing friction to attain high efficiency.

In the related art, however, means for circulation of the multiplicity of balls is essential, and when circulation of the balls is not smooth, slide friction is generated between the balls and the nut and between the balls and the rack whereby the balls are increased in coefficient of friction to lead to reduction in conversion efficiency.

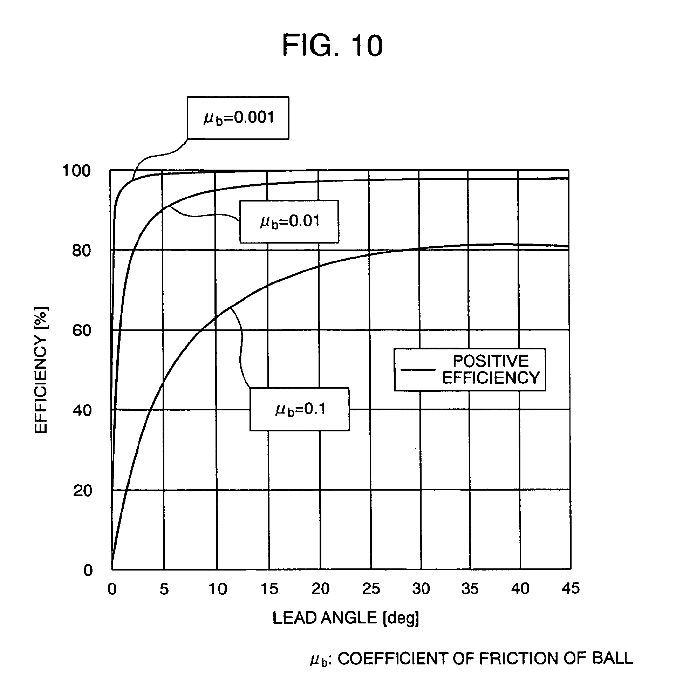

In particular, in order to make a motor small in size, threads must be made small in lead angle (around 5 degrees in the existing state) in a steering device, which is set to be large in reduction ratio, so that a remarkable decrease in efficiency is resulted as shown in Fig. 10 when balls are increased in coefficient of friction (around 0.01 in the existing state).

Fig. 10 shows the relationship between a lead angle and efficiency of a ball screw mechanism with a coefficient of friction of balls as a parameter. As shown in the figure, it is found that as the coefficient of friction of balls increases from around 0.01, the conversion efficiency decreases.

With the related art, once slippage begins to generate, rolling surfaces of balls begin to roughen, which brings about further slippage to cause a catastrophic, rapid rise in coefficient of friction of balls, thus giving rise to a fear of breakage of the mechanism in a short time.

Therefore, it is a supreme task in such mechanism to maintain a state of circulation of balls favorable at all times, so that high accuracy of balls, nut threads, and rack threads in shape and dimensions is a most important point as well as optimum design of a ball return path, which leads to an increase in cost.

Since a necessary accuracy is rapidly heightened as the balls are increased in number, an actual limit is determined on an upper limit of the number of balls in terms of cost while the number of balls determines a maximum output that can be generated by the mechanism.

Accordingly, with a ball screw mechanism according to the related art, a practically upper limit comes out in transmission force, so that power steering devices making use of the mechanism involve a problem that they cannot be mounted on large-sized cars, of which a large output (rack thrust) is demanded.

Document US 4 838 103 constitutes the closest prior art and describes a mechanism according to the preamble of independent claim 1.

Brief Summary of the Invention

It is an object of the invention to provide a mechanism for converting rotary motion into linear motion, which can efficiently accommodate a large thrust.

The object is attained by a mechanism for converting rotary motion into linear motion, the mechanism comprising a rack rod in the form of a round bar, a holder member supported around the rack rod to be rotatable relative to the rack rod, a revolving roller rotatably supported on the holder member, and a rotary power source that rotates the rack rod and the holder member relative to each other, and wherein the rack rod comprises threads on an outer peripheral surface thereof, the revolving roller comprises an annular groove provided on an outer peripheral surface thereof to mesh with the threads of the rack rod and to make a round about the outer peripheral surface of the revolving roller, and a biaxial angle formed between an axial direction of the rack rod and an axial direction of the revolving roller is made the same as a lead angle of the threads of the rack rod, the revolving roller being arranged relative to the rack rod in a twisted manner.

The object is also attained when frictional torque generated at a bearing part that rotatably supports the revolving roller to the holder member is made smaller than frictional torque generated at a mesh part of the threads on the outer peripheral surface of the rack rod and the annular groove of the revolving roller, and the object is also attained when a point of closest approach on an axis of revolution of the revolving roller to be defined as a point near to a rack rod axis being an axis of rotation of the rack rod lies substantially centrally on the axis of revolution of the revolving roller.

Also, the object is attained when at least one of locations of mesh of the revolving roller and the rack rod is made linear.

Likewise, the object is attained when there are mounted a plurality of the revolving rollers, the plurality of the revolving rollers are further arranged at substantially equiangular intervals around the rack rod, and kinds of the revolving rollers are besides made smaller than the number of the revolving rollers as mounted.

Also, a drive force of the rotary power source may be given to the holder member to rotate the holder member to thereby realize rotation thereof relative to the rack rod, axial angle adjustment means that can adjust the biaxial angle after the revolving roller and the rack rod mesh with each other may be provided, or at least the annular groove or grooves of the revolving roller or rollers may be formed from a synthetic resin.

According to the invention, it is possible to generate a large thrust (rack thrust) to provide a mechanism for converting rotary motion into linear motion, which is high in efficiency.

Also, according to the invention, application of a mechanism for converting rotary motion into linear motion, of which a rotary power source comprises a motor, to an automobile steering makes it possible to mount an electrically-driven steering device on large-sized cars.

Other objects, features and advantages of the invention will become apparent from the following description of the embodiments of the invention taken in conjunction with the accompanying drawings.

Brief Description of the Several Views of the Drawing

Fig. 1 is a view showing, in cross section, a first embodiment of a mechanism for converting rotary motion into linear motion, according to the invention;

Fig. 2 is a view showing, in another cross section, the first embodiment of the mechanism for converting rotary motion into linear motion, according to the invention;

Fig. 3 is a transverse, cross sectional view showing a holder member in the first embodiment of the mechanism for converting rotary motion into linear motion, according to the invention;

Fig. 4 is a side view showing a state, in which revolving rollers in the first embodiment of the mechanism for converting rotary motion into linear motion, according to the invention are sub-assembled;

Fig. 5 is a view illustrating the distribution of locations of mesh on the revolving roller as viewed in an axial direction of a rack in the first embodiment of the mechanism for converting rotary motion into linear motion, according to the invention;

Fig. 6 is a showing, in partial cross section, the revolving roller in the first embodiment of the mechanism for converting rotary motion into linear motion, according to the invention;

Fig. 7 is a view illustrating an operation of the first embodiment of the mechanism for converting rotary motion into linear motion, according to the invention;

Fig. 8 is a view illustrating a revolving roller in a second embodiment of a mechanism for converting rotary motion into linear motion, according to the invention;

Fig. 9 is a view illustrating an arrangement and an operation of revolving rollers in a third embodiment of a mechanism for converting rotary motion into linear motion, according to the invention; and

Fig. 10 is a view exemplarily illustrating the characteristics of efficiency of a ball screw mechanism according to the related art.

Detailed Description of the Invention

A mechanism for converting rotary motion into linear motion, according to the invention, will be described in detail by way of embodiments as shown.

Here, the mechanism for converting rotary motion into linear motion, according to the invention, is frequently used in power steering devices for automobiles. Hereupon, respective embodiments will be described with respect to the case where the mechanism for converting rotary motion into linear motion, according to the invention, is applied to a rack assist type electrically-driven steering device.

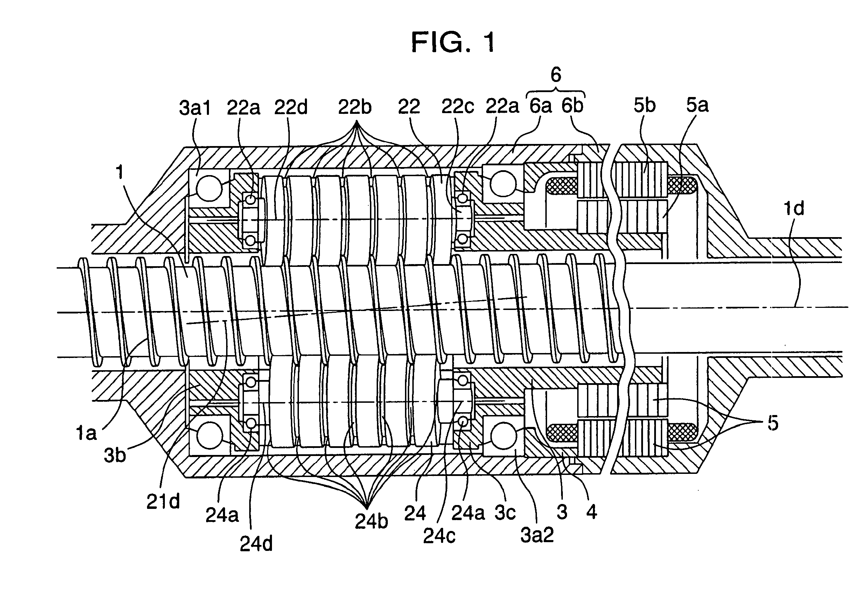

Figs. 1 to 6 show a first embodiment of the invention. Here, prior to an explanation of the drawings, an explanation will be first given to how elements in the embodiments of the invention correspond to those in a rack assist type electrically-driven steering device.

First, a rack rod in the embodiments of the invention corresponds to a rack in the steering device, a rack screw corresponds to a rack groove, and a rack rod shaft corresponds to a rack shaft. The rack is held by translation bearings to be able to move in an axial direction but not to rotate.

Here, while such translation bearings are not shown, a pinion and a rack serve as the bearings in a rack and pinion type steering device.

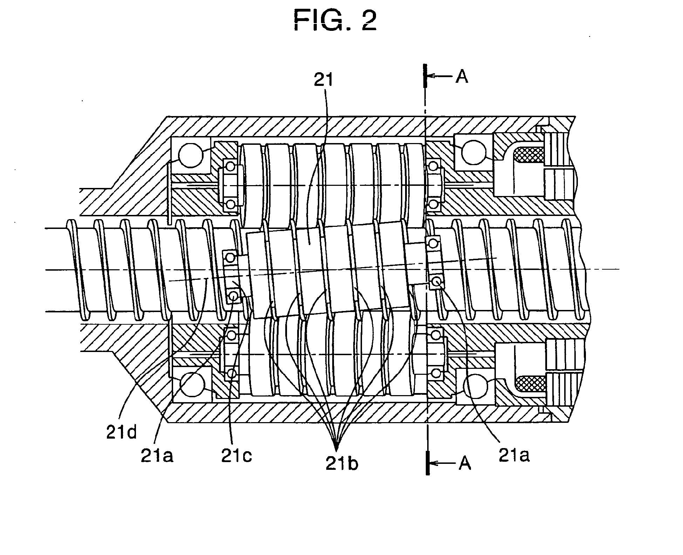

First, Fig. 1 is a longitudinal, cross sectional view showing a mechanism for converting rotary motion into linear motion, in a rack assist part of an electrically-driven steering device, to which an embodiment of the invention is applied, and Fig. 2 is the same cross sectional view in the case where revolving rollers are arranged this side. So, only parts not shown in Fig. 1 are denoted by reference numerals.

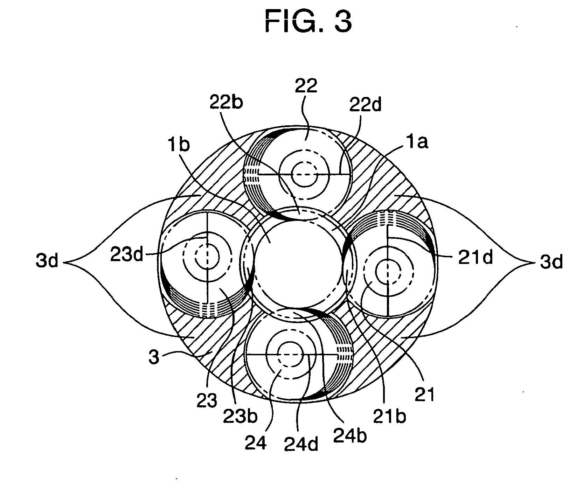

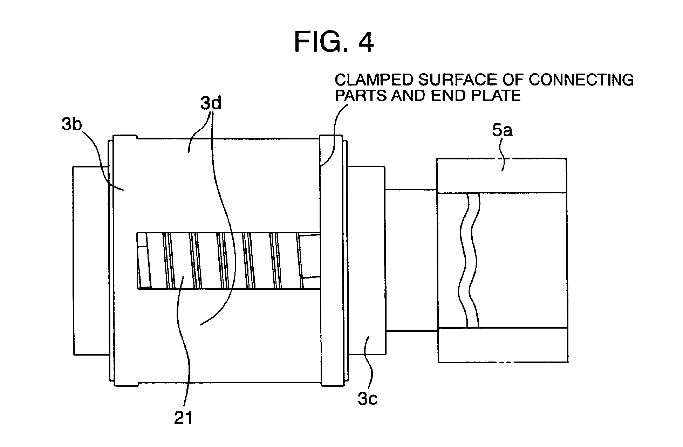

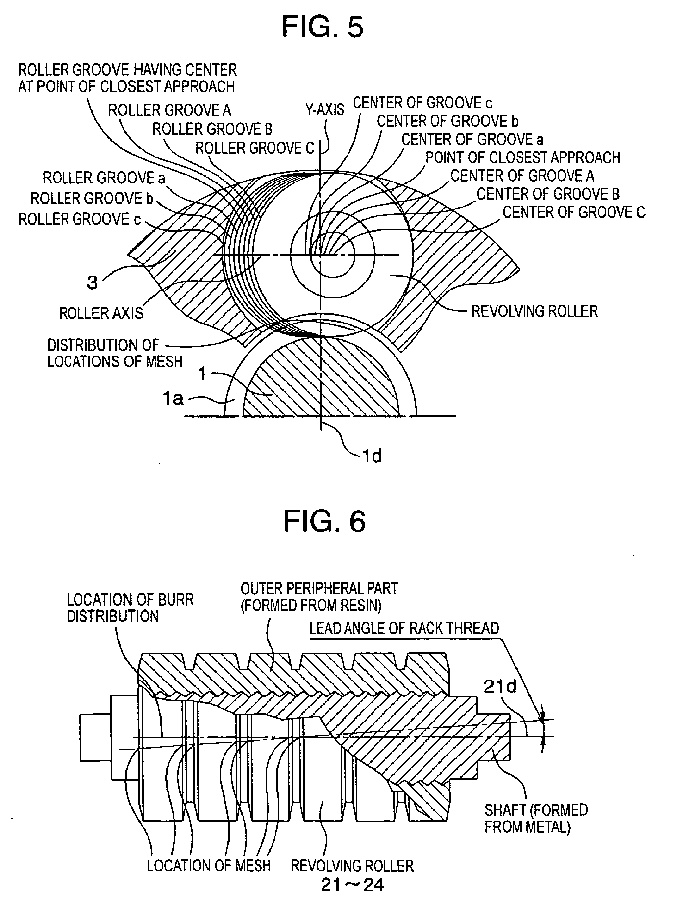

Subsequently, Fig. 3 is a transverse, cross sectional view (an A-A cross section in Fig. 2) showing a holder member, and Fig. 4 is a side view showing the holder member, to which the revolving rollers are sub-assembled. Fig. 5 is a view showing the distribution of locations of mesh in one revolving roller as viewed in an axial direction of a rack, and Fig. 6 is a longitudinal, cross sectional view showing the revolving rollers.

First, as shown in Figs. 1 to 3, according to the embodiment, an outer peripheral surface of a rack rod 1 is threaded to form a rack thread 1a. Here, the rack rod means a rod (round bar) connected to a rack of a rack and pinion type steering device.

In particular, as best shown in Fig. 3, arranged at equiangular intervals of 90 degrees around a rack shaft 1b are four revolving rollers 21, 22, 23, 24, which comprise roller grooves 21b, 22b, 23b, 24b composed of an annular groove to mesh with the rack thread 1a and revolve around the rack shaft 1b, which constitutes a central shaft of the rack rod 1.

At this time, the respective roller grooves 21b, 22b, 23b, 24b are formed as grooves to make rounds of outer peripheral surfaces of the respective revolving rollers, and provided on all the respective revolving rollers 21, 22, 23, 24.

Here, since all the respective roller grooves 21b, 22b, 23b, 24b are arranged on a holder (holder member) 3 in a manner to mesh with the rack thread 1a, angles, which all roller axes 21d, 22d, 23d, 24d of the revolving rollers 21, 22, 23, 24 form to a direction along a rack axis 1d, are made equal to a lead angle of the rack thread 1a as best shown in Fig. 2 with the result that the respective revolving rollers 21, 22, 23, 24 are arranged in postures that are twisted relative to the rack rod 1.

At this time, the revolving rollers 21 to 24, respectively, are supported at both ends 21c to 24c by roller bearings 21a to 24a, each of which comprises an angular ball bearing, and the roller bearings are fitted into the holder 3 whereby all the revolving rollers 21 to 24 can be made to rotate on their own axes.

Here, since thrust loads together with radial loads are applied to the roller bearings 21a to 24a, angular ball bearings capable of bearing loads in both directions are used. The roller bearings are not limited to this type but may of course comprise a tapered roller bearing or a combination of a thrust bearing and a radial bearing. Here, in the case where there is a restriction in diametrical dimension, needle bearings will do.

The holder 3 comprises, as shown in Figs. 3 and 4, two end plates 3b, 3c that interpose therebetween the revolving rollers 21, 22, 23, 24, and connecting parts 3d that connect the end plates. The connecting parts 3d are formed integral with one 3b of the end plates and clamped to the other 3c of the end plates by screws.

In particular, as shown in Fig. 4, the connecting parts 3d are provided around the rack rod 1 between the respective revolving rollers 21, 22, 23, 24, and mounted in four locations in the embodiment since the four revolving rollers are provided.

Subsequently, a pipe part is extended from one 3c of the end plates in a manner to cover the rack rod 1, and a rotor 5a that constitutes an element of a motor 5 is fixed to the pipe part by means of press fit or shrinkage fit.

The holder 3 is rotatably supported in a casing 6 by holder bearings 3a1, 3a2, and angular ball bearings capable of bearing loads in both directions are used for the holder bearings as shown in the figure since thrust loads together with radial loads are applied to the bearings.

However, the holder bearings are not limited to this type but may of course comprise a combination of a thrust bearing and a radial bearing. Also, the holder bearings 3a1, 3a2, respectively, may of course comprise a double-row angular ball bearing.

In this manner, the holder 3, into which the revolving rollers are assembled, is fixed to and arranged in the casing 6 by a bearing cap 4, and the casing 6 is divided into a holder member casing 6a, into which the holder bearings are fitted, and a motor casing 6b, into which a stator 5b of the motor 5 is press-fitted or shrinkage-fitted.

The holder 3, into which the revolving rollers 21 to 24 are assembled, is mounted to the holder member casing 6a, and then the motor casing 6b is mounted to the holder member casing. Thereby, the stator 5b and the rotor 5a are made opposite to each other to form the motor 5. At the time of assembly, grease is caused to flow appropriately between the elements.

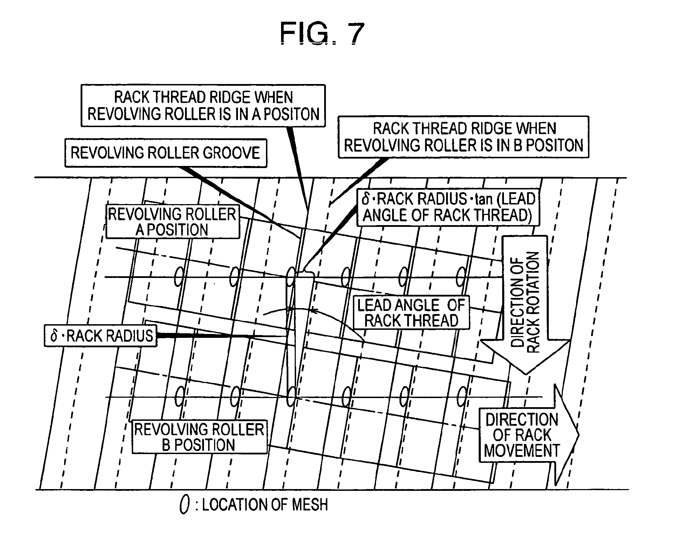

Subsequently, an operation of the embodiment will be described with reference to Fig. 7. Fig. 7 is a view showing, in development, an outer peripheral surface of the rack rod 1 for the purpose of describing the principle of operation.

Assuming that the motor 5 is actuated, the holder 3 rotates about the rack shaft 1b and the four revolving rollers 21 to 24 held on the holder revolve around the rack rod 1.

Then, since the roller grooves 21b to 24b of the respective revolving rollers 21 to 24 mesh with the rack thread 1a of the rack rod 1, the respective revolving rollers are caused by forces from the rack thread to rotate on their own axes.

Here, since the roller grooves 21b to 24b are not in the form of a thread but in the form of a groove that make a round in a plane perpendicular to the roller axis, locations (positions), in which the roller grooves 21b to 24b mesh with the rack thread 1a, are not moved axially even in whatever manner the revolving rollers 21 to 24 rotate on their own axes, and of course axial positions of the roller grooves 21b to 24b are not varied but invariable also at the time of revolution.

Here, thick lines in Fig. 7 indicate thread ridges of the rack thread 1a when the revolving rollers 21 to 24 are disposed in an A position. Let consider the case where the revolving rollers revolve $\delta$ radian from the A position to move $\delta \cdot$ (radius of the rack shaft) on a circle (a vertical direction in development) of the rack rod to reach a B position.

At this time, positions of the roller grooves are not moved in the direction along the rack axis as described above but moved only in the vertical direction in development. Therefore, in the case where the rack rod is moved $\delta \times$ (radius of the rack shaft) $\times$ tan (lead angle of the rack thread) in an axial direction (a right and left direction in development), the thread ridges are moved to a position indicated by broken lines to maintain mesh of the roller grooves and the rack thread.

Thereby, a rack shift M (referred below to as mechanism pitch) of the motor 5 per revolution is represented by the following formula assuming that $\delta$ is $2\pi$.

```
M = 2π × (radius of rack shaft) × tan (lead angle of

rack thread).
```

As apparent from the formula, by making the lead angle of the rack thread small, it is possible to increase a reduction ratio to generate a large rack thrust.

Accordingly, in other words, the invention provides a method of realization of rolling contact through the medium of division of a nut into freely rotating rollers, and it is important that the roller axes 21d, 22d, 23d, 24d of the revolving rollers 21, 22, 23, 24 are deviated an angle equal to the lead angle of the rack thread 1a from the direction of the rack axis 1d.

Here, the revolving rollers 21 to 24 are held on the holder 3 by the roller bearings 21a to 24a to be free to rotate, so that coefficients of friction involved in rotation are remarkably lower than those at locations of mesh.

Therefore, the respective revolving rollers 21 to 24 can rotate on their own axes at those rotating speeds, at which the respective roller grooves 21b to 24b have as small speeds relative to the surface of the rack thread 1a as possible, with the result that substantially rolling contact occurs at locations of mesh, so frictional loss is decreased, and high efficiency is obtained.

At this time, as shown in Fig. 5, locations of mesh on respective roller grooves in one revolving roller are generally distributed in the vicinity of a line (Y-axis), which connects a point of closest approach on the revolving roller and a center of the rack as viewed the direction of the rack axis.

On the other hand, since the roller axes 21d, 22d, 23d, 24d of the revolving rollers 21, 22, 23, 24 are deviated an angle equal to the lead angle of the rack thread 1a from the direction along the rack axis 1d as described above, the roller axes form angles to the rack axis and the more the roller grooves are distant from the point of closest approach, the more central positions of the roller grooves are distant from the Y-axis, so that velocity components of the roller grooves at locations of mesh in a radial direction increase.

Since velocity components of the rack thread at locations of mesh in the radial direction is 0 at this time, velocity components of the roller grooves in the radial direction make sliding velocities as they are to be responsible for frictional loss, with the result that when the roller grooves of the revolving rollers are provided in positions away from the points of closest approach, frictional loss at locations of mesh increases to lead to degradation in performance.

According to the embodiment, however, points of closest approach of the respective revolving rollers 21, 22, 23, 24 to the rack rod 1 are positioned substantially centrally of the revolving rollers, so that there is present no roller groove considerably away from the point of closest approach, which has an advantage that little decrease in efficiency can be generated.

By the way, in the case where thrust (rack thrust) is generated on the rack rod 1, its reaction force is produced in an axial direction of the rack rod 1 and finally applied at those locations, in which the rack ·thread 1a and the roller grooves 21b to 24b of the respective revolving rollers mesh with each other.

According to the embodiment, since a plurality of the roller grooves are provided on one revolving roller, locations of mesh are increased according to the number of the grooves, with the result that it is possible to bear a large load.

According to the embodiment, since the plurality (here, four, that is, the revolving rollers 21 to 24) of the revolving rollers are provided, locations of mesh are further increased, according to which it is possible to bear a large load, with the result that it is possible to generate a large rack thrust.

Moreover, according to the embodiment, since the revolving rollers 21 to 24 are arranged at equiangular intervals around the rack rod 1, components in a radial direction (a radial direction about the rack axis 1d) , of forces applied on the respective revolving rollers cancel one another and are not exerted outside.

As a result, loads on the holder bearings 3a1, 3a2 are decreased, so that it is possible to use bearings of small load capacities to contribute to reduction in cost and miniaturization and since frictional loss generated there is also decreased, it is also possible to contribute to an improvement in performance.

By the way, mesh at this time is caused by contact between the thread surface of the rack thread 1a and the groove surfaces of the roller grooves 21b to 24b, so that the situation of contact can be freely set according to design of these surfaces, which makes a great difference as compared with the fact that contact at ball parts in a ball screw mechanism is limited to point contact.

Accordingly, according to the embodiment, by designing the groove surface configurations of the closest-approach grooves such that line contact occurs at locations of contact, it is possible to bear a further large load, with the result that it is possible to generate a further large rack thrust.

Subsequently, the revolving rollers 21 to 24 in the embodiment will be described with reference to a cross sectional view of Fig. 6. In the revolving rollers, a shaft part and an outer peripheral part including a roller groove are formed from different materials as shown in the figure such that the former is formed from a material, for example, metal such as aluminum or the like, having a large Young's modulus and the latter is formed from a resin such as engineering plastics.

The embodiment has an advantage that a roller groove part, of which complexity in shape is demanded, can be manufactured by means of die forming of a resin, which contributes to reduction in cost, and one of those parts, which are in mesh with each other, is formed from a resin to be able to accommodate a measure of interference by deformation of the resin, which makes it possible to set a form tolerance in expectation of the deformation, whereby it is possible to avoid play at locations of mesh.

Here, such capability of avoidance of play means that it is possible to avoid presence of that dead zone, in which a steering wheel does not react entirely even when a handle is manipulated, and can contribute to an improvement in feeling of steering.

By the way, while such die forming of a resin involves a problem that burr is generated at joints of a die, burr in this case is distributed in parallel to the roller axis 21d as shown in Fig. 6 when taking account of die drawing. On the other hand, since positions of mesh are not distributed in parallel to the roller axis 21d as apparent from Fig. 7, plural burr portions do not come to locations of mesh even when burr is present, so that there is no fear that failure in mesh occurs.

In this case, however, while the rack thread 1a is formed from a metal, the roller grooves are formed from a resin and need a thickness in reverse proportion to the material strength of the resin, so that while the rack thread 1a can be made thin, there is a need of consideration such as enlargement of intervals (thickness of roller ridges) of the roller grooves.

Here, let consider assembly of the revolving rollers 21 to 24 into the holder 3. At this time, the end plate 3c is temporarily screwed to the connecting parts 3d, which is unified with the end plate 3b, to form a subassembly, the subassembly is inserted into the holder member casing 6a, and the rack rod 1 is screwed centrally of the subassembly.

Thereafter, the connecting parts 3d and the end plate 3c, which have been temporarily screwed together, are once released from clamping, the end plate 3c is somewhat twisted to adjust biaxial angles of the roller axes and the rack axis to decrease play at locations of mesh, and the connecting parts and the end plate are again clamped.

Then, since friction on the bearing parts increases as play is decreased, twist is made appropriate, which means that adjustment of play and efficiency can be made at the final stage of assembly, so that the embodiment has an advantage that it is possible to reduce the degree of play and dispersion in efficiency.

According to the embodiment, since the stator 5b of the motor 5 is provided on the casing 6, the rotor 5a is provided on the holder 3, and while not shown, means for permitting translation but preventing rotation is provided on the rack rod 1 as described above, the rack rod 1 does not rotate but only makes translation, so that an advantage of convenience is produced due to no fear that torque is transmitted to a tie rod mounted on a tip end of the rack rod 1.

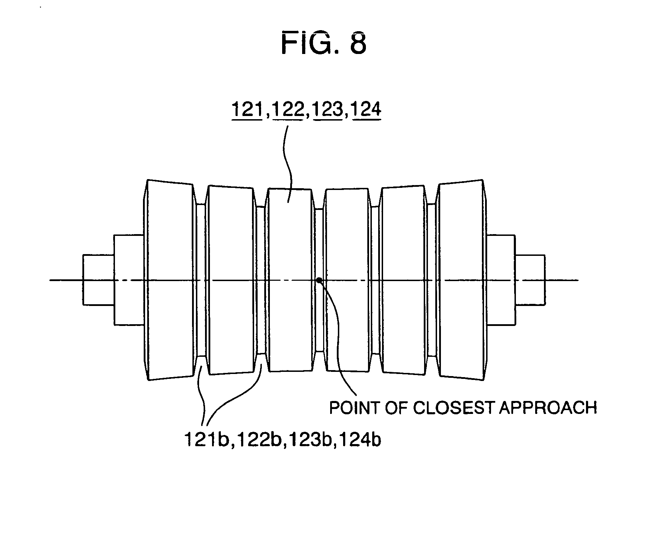

Subsequently, a second embodiment of the invention will be described. The embodiment uses, as revolving rollers, drum-shaped revolving rollers 121, 122, 123, 124 having a small outside diameter in those portions of roller grooves 121b, 122b, 123b, 124b, which have centers nearest to points of closest approach, and being increased in outside diameter toward both sides thereof, as shown in Fig. 8, and is the same in other respects as the embodiment described above, and so an explanation is omitted with respect to constructions and operations of the remaining parts.

With the embodiment, which is described above and in which the roller grooves are constant in outside diameter, an upper limit is imposed on the number of locations of mesh as set because the more separate the roller grooves 21b, 22b, 23b, 24b, are from points of closest approach, the smaller regions, in which mesh can be made, and when the roller grooves are too separate from points of closest approach, mesh is made impossible as readily seen from Fig. 5.

With the embodiment shown in Fig. 8, even when the roller grooves 121b, 122b, 123b, 124b are made separate from points of closest approach, regions of mesh are ensured since the revolving rollers 121, 122, 123, 124 are increased in outside diameter, with the result that locations of mesh per one revolving roller are increased in number to produce a peculiar effect that rack thrust can be further increased.

Subsequently, a third embodiment of the invention will be described. With the embodiment described above, the first revolving roller 21 and the second revolving roller 22 among the four revolving rollers 21, 22, 23, 24 are arranged around the rack rod 1, on which the rack thread 1a composed of a single thread is threaded, in a manner to mesh with the rack thread 1a but not to get out of position in the axial direction.

Therefore, axial positions of the roller grooves 21b, 22b, respectively, provided on the revolving rollers 21, 22 must be changed every roller. As apparent from Fig. 1, the revolving roller 22 disposed above the rack rod 1 is provided on both ends thereof with no mesh surfaces while both ends of the revolving roller 24 disposed below the rack rod 1 serve as mesh surfaces.

This is because the rack thread 1a of the rack rod 1 is worthy of thread to be moved axially by half pitch when it advances 180 degrees, so that in the case where revolving rollers are provided in plural, roller grooves must be made different in axial position, every revolving roller.

That is, with the embodiment described above, it is necessary to manufacture a plurality of revolving rollers, of which roller grooves are different from one another in axial position, so that mass-productiveness is low to be problematic in terms of cost.

Besides, in this case, those points of roller closest approach, which are nearest to the rack shaft 1b, on the roller axes being central axes of the revolving rollers, are all disposed substantially centrally of the revolving rollers, whereby all the roller grooves are positioned differently from the points of roller closest approach, and not put in the same positions, so that groove shape must be designed and manufactured separately every roller groove, which leads to a further increase in cost.

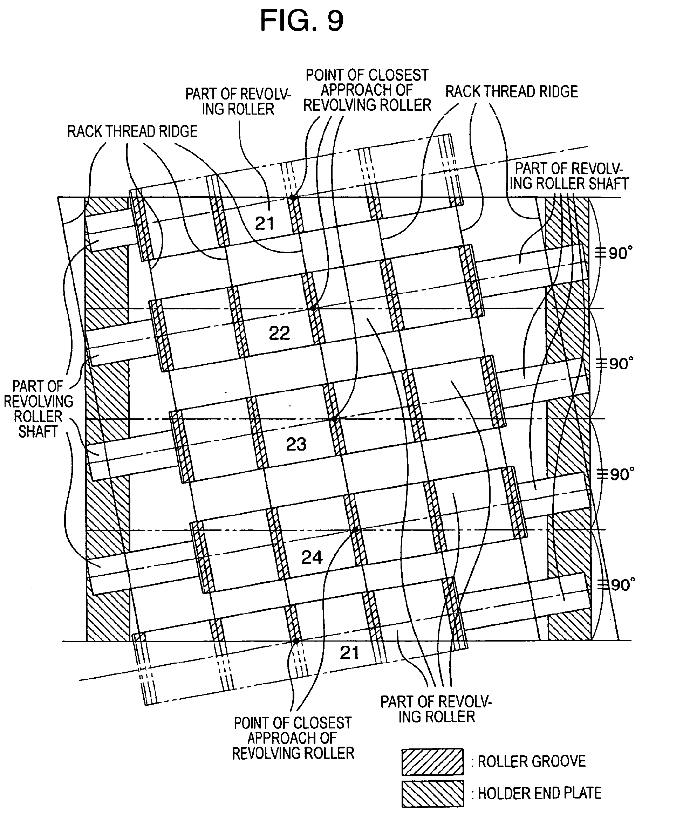

Hereupon, according to a third embodiment, a single kind of revolving roller will do. The third embodiment will be described with reference to Fig. 9. Like Fig. 7, Fig. 9 is also a view, in which a rack thread 1a of a rack rod 1 is developed in plane and revolving rollers 21 to 24 having the same roller groove are successively shifted in an axial direction to be arranged on a holder 3.

In this case, the four revolving rollers are provided and the first revolving roller 21 to the last revolving roller 24 are shifted in this order whereby it suffices to prepare the revolving rollers 21 to 24 having the same roller groove, thus enabling achieving a considerable reduction in cost.

While the revolving rollers 21 to 24, respectively, must be changed in axial length, a considerable reduction in cost can be achieved since roller grooves 21b, 22b, 23b, 24b involving much cost in design and manufacture can be all made the same.

With the third embodiment, all the revolving rollers 21 to 24 have points of closest approach centrally thereof, so that three kinds of shapes are sufficient for the roller grooves, by which a further reduction in cost can be achieved.

With the third embodiment, while the revolving rollers are four in number, the method of shifting the revolving rollers in the axial direction is not limited to the case where the revolving rollers are four in number but can be also carried out in other cases.

Besides, one kind of forming die will do in the case where the revolving rollers are molded from a resin, so that reduction in cost is achieved in this respect.

By the way, with all the embodiments, while revolving rollers, for example, the revolving rollers 21 to 24 are substantially the same in diameter as the rack rod 1, it is possible in the embodiment of the invention to make the revolving rollers smaller in diameter than the rack rod as far as strength affords that.

In this case, the revolving rollers can be further increased in number whereby it is also possible to meet with the case where a further large rack thrust is needed.

**Claims**

**1.** A mechanism for converting rotary motion into linear motion, the mechanism comprising

- a rack rod (1) in the form of a round bar, a holder member (3) supported around the rack rod (1) to be rotatable relative to the rack rod (1), a revolving roller (21-24; 121-124) rotatably supported on the holder member (3) and a rotary power source (5) that rotates the rack rod (1) and the holder member (3) relative to each other,

the rack rod (1) comprising a thread (1a) on an outer peripheral surface thereof,
the revolving roller (21-24; 121-124) comprising annular grooves (21b-24b) provided on an outer peripheral surface thereof to mesh with the thread (1a) of the rack rod (1) and to make a round about the outer peripheral surface of the revolving roller (21-24; 121-124), and
a biaxial angle formed between an axial direction of the rack rod (1) and an axial direction of the revolving roller (21-24; 121-124) being made the same as a lead angle of the thread (1a) of the rack rod (1), the revolving roller (21-24; 121-124) being arranged relative to the rack rod (1) in a twisted manner,
**characterized in that**
surfaces of the grooves (21b-24b) of the revolving roller (21-24; 121-124) and surfaces of the thread (1a) of the rack rod (1) are defined so that locations of mesh between the revolving roller (21-24; 121-124) and the rack rod (1) are distributed, as viewed from the axial direction of the rack rod (1), in the vicinity of a line (Y-axis) interconnecting points of closest approach which are respectively on axes of the revolving roller (21-24; 121-124) and the rack rod (1) and at positions where the axes closest approach each other.

2. Mechanism according to claim 1,
   **characterized in that**
   a frictional torque generated at a bearing part (21a-24a) that rotatably supports the revolving roller (21-24; 121-124) to the holder member (3) is made smaller than frictional torque generated at a mesh part of the threads (1a) on the outer peripheral surface of the rack rod (1) and the annular groove (21b-24b) of the revolving roller (21-24; 121-124).

3. Mechanism according to claim 1 or 2,
   **characterized in that**
   a point of closest approach on an axis of revolution of the revolving roller (21-24; 121-124) to be defined as a point near to a rack rod axis (1d) being an axis of rotation of the rack rod (1) lies substantially centrally on the axis of revolution of the revolving roller (21-24; 121-124).

4. Mechanism according to any one of claims 1 to 3,
   **characterized in that**
   a drive force of the rotary power source (5) is given to the holder member (3) to rotate the holder member (3) to thereby realize rotation thereof relative to the rack rod (1).

5. Mechanism according to one of the claims 1 to 4,
   **characterized by**
   axial angle adjustment means (3c, 3d) that can adjust the biaxial angle after the revolving roller (21-24; 121-124) and the rack rod (1) mesh with each other.

6. Mechanism according to any one of claims 1 to 5,
   **characterized in that**
   at least the annular groove or grooves (21b-24b) of the revolving roller or rollers (21-24; 121-124) are formed from a synthetic resin.

7. Mechanism according to any one of claims 1 to 6,
   **characterized in that**
   the revolving roller (12, 122, 123, 124) has a shape of which outside diameter increased as away from the points of closest approach.

8. Mechanism according to claim 4,
   **characterized in that**
   a pipe part is extended from the holder member (3) so as to cover the rack rod (1), and a hollow motor (5) of which rotor (5a) is fixed on the pipe part is provided.

9. Mechanism according to claim 6,
   **characterized in that**
   the annular grooves (21b-24b) are formed from a resin, and interval between adjacent annular grooves (21b-24b) is larger than the width of the annular grooves (21b-24b).

**10.** Mechanism according to claim 6,
**characterized in that**
a shaft part of the revolving roller (21-24; 121-124) is formed from metal.

**11.** Mechanism according to claim 6,
**characterized in that**
the revolving roller (21-24; 121-124) is formed by mold forming wherein a parting plane of the mold forming is located on a plane including the axis of the revolving roller (21-24; 121-124).

**Patentansprüche**

**1.** Vorrichtung zum Umwandeln einer Drehbewegung in eine Linearbewegung, mit

- einer Zahnstange (1) in Form eines Rundstabs, einem auf der Zahnstange (1) relativ zu dieser verdrehbar gelagerten Halteglied (3), einer drehbar vom Halteglied (3) getragenen Umlaufrolle (21-24; 121-124) und einem Drehantrieb (5), der die Zahnstange (1) und das Halteglied (3) relativ zueinander dreht, wobei
- die Zahnstange (1) an ihrer äußeren Umfangsfläche einen Gewindegang (1a) aufweist,
- die Umlaufrolle (21-24; 121-124) Ringnuten (21b-24b) an ihrer äußeren Umfangsfläche aufweist, die mit dem Gewindegang (1a) der Zahnstange (1) in Eingriff stehen, und einen Rundlauf um die äußere Umfangsfläche der Umlaufrolle (21-24; 121-124) bilden, und
- ein biaxialer Winkel zwischen einer Axialrichtung der Zahnstange (1) und einer Axialrichtung der Umlaufrolle (21-24; 121-124) gleich groß wie ein Steigungswinkel des Gewindeganges (1a) der Zahnstange (1) ist,
- die Umlaufrolle (21-24; 121-124) relativ zur Zahnstange (1) verdreht angeordnet ist,
**dadurch gekennzeichnet, dass**
- Oberflächen der Nuten (21b-24b) der Umlaufrolle (21-24; 121-124) und Oberflächen des Gewindeganges (1a) der Zahnstange (1) so definiert sind, dass die Eingriffsstellen zwischen der Umlaufrolle (21-24; 121-124) und der Zahnstange (1) - gesehen in Axialrichtung der Zahnstange (1) - in der Nähe einer Linie (Y-Achse) verteilt sind, welche Punkte der dichtesten Annäherung verbinden, die sich jeweils auf Achsen der Umlaufrolle (21-24; 121-124) und der Zahnstange (1) in Positionen befinden, in welchen die Achsen am dichtesten einander angenähert sind.

**2.** Vorrichtung nach Anspruch 1,
**dadurch gekennzeichnet, dass**
ein Reibmoment, das an einem Lagerteil (2 1 a-24a) erzeugt wird, der die Umlaufrolle (21-24; 121-124) drehbar am Halteglied (3) trägt, kleiner ist als ein Reibmoment, die an einem Eingriffsteil des Gewindeganges (1a) an der äußeren Umfangsfläche der Zahnstange (1) und der Ringnut (21b-24b) der Umlaufrolle (21-24; 121-124) wirksam ist.

**3.** Vorrichtung nach Anspruch 1 oder 2,
**dadurch gekennzeichnet, dass**
ein Punkt der dichtesten Annäherung an eine Drehachse der Umlaufrolle (21-24; 121-124), der als ein Punkt nahe einer Zahnstangenachse (1d) definiert ist, die eine Drehachse der Zahnstange (1) bildet, im Wesentlichen zentral auf der Drehachse der Umlaufrolle (21-24; 121-124) liegt.

**4.** Vorrichtung nach einem der Ansprüche 1 bis 3,
**dadurch gekennzeichnet, dass**
eine Antriebskraft des Drehantriebs (5) auf das Halteglied (3) ausgeübt wird, um das Halteglied (3) relativ zur Zahnstange (1) zu drehen.

**5.** Vorrichtung nach einem der Ansprüche 1 bis 4,
**gekennzeichnet durch**
Axialwinkel-Einstellmittel (3c, 3d) zum Einstellen des biaxialen Winkels, nachdem sich die Umlaufrolle (21-24; 121-124) und die Zahnstange (1) miteinander in Eingriff befinden.

**6.** Vorrichtung nach einem der Ansprüche 1 bis 5,
**dadurch gekennzeichnet, dass**
zumindest die Ringnut oder die Nuten (21b-24b) der Umlaufrolle oder der Rollen (21-24; 121-124) aus Kunstharz geformt sind.

**7.** Vorrichtung nach einem der Ansprüche 1-6,
**dadurch gekennzeichnet, dass**
die Umlaufrolle (12, 122, 123, 124) eine Gestalt hat, bei welcher der Außendurchmesser sich mit Entfernen von den Punkten der dichtesten Annäherung vergrößert.

**8.** Vorrichtung nach Anspruch 4,
**dadurch gekennzeichnet, dass**
ein Rohrteil sich vom Halteglied (3) erstreckt und die Zahnstange (1) überdeckt, und ein hohler Motor (5) vorgesehen ist, dessen Rotor (5a) an dem Rohrteil befestigt ist.

**9.** Vorrichtung nach Anspruch 6,
**dadurch gekennzeichnet, dass**
die Ringnuten (21b-24b) aus Harz geformt sind und der Zwischenraum zwischen benachbarten Ringnuten (21b-24b) größer als die Breite der Ringnuten (21b-24b) ist.

**10.** Vorrichtung nach Anspruch 6,
**dadurch gekennzeichnet, dass**
ein Wellenteil der Umlaufrolle (21-24; 121-124) aus Metall geformt ist.

**11.** Vorrichtung nach Anspruch 6,
**dadurch gekennzeichnet, dass**
die Umlaufrolle (21-24; 121-124) durch Gießformen gebildet ist, wobei eine Trennebene der Gießform in einer die Achse der Umlaufrolle (21-24; 121-124) enthaltenden Ebene angeordnet ist.

**Revendications**

**1.** Un mécanisme permettant de convertir un mouvement rotatif en mouvement linéaire, le mécanisme comprenant :

- une tige à crémaillère (1) sous la forme d'une barre ronde, un élément de support (3) maintenu autour de la tige à crémaillère (1) de manière à pouvoir tourner par rapport à la tige à crémaillère (1), un galet rotatif (21-24 ; 121-124) maintenu de manière à pouvoir tourner sur l'élément de support (3) et une source de courant rotative (5) qui fait tourner la tige à crémaillère (1) et l'élément de support (3) l'un par rapport à l'autre,

la tige à crémaillère (1) comprenant un filet (1a) sur une surface périphérique externe de celle-ci,
le galet rotatif (21-24 ; 121, 124) comprenant des gorges annulaires (21b-24b) disposées sur une surface périphérique externe de celui-ci pour s'engrener avec le filet (1a) de la tige à crémaillère (1) et pour former un rond autour de la surface périphérique externe du galet rotatif (21-24 ; 121-124) et
un angle biaxial formé entre une direction axiale de la tige à crémaillère (1) et une direction axiale du galet rotatif (21-24 ; 121-124) est conçu identique à un angle de filet du filet (1a) de la tige à crémaillère (1), le galet rotatif (21-24 ; 121-124) étant disposé de manière courbée par rapport à la tige à crémaillère (1),
**caractérisé en ce que**
les surfaces des gorges (21b-24b) du galet rotatif (21-24 ; 121-124) et les surfaces du filet (1a) de la tige à crémaillère (1) sont définies de sorte que les emplacements de l'engrènement entre le galet rotatif (21-24 ; 121-124) et la tige à crémaillère (1) soient répartis, à partir de la direction axiale de la tige à crémaillère (1), à proximité d'une ligne (axe Y) reliant les points d'approche maximale qui se trouvent respectivement sur les axes du galet rotatif (21-24 ; 121-124) et de la tige à crémaillère (1) et dans les positions où les axes se rapprochent le plus l'un de l'autre.

**2.** Mécanisme selon la revendication 1,
**caractérisé en ce que**
un couple de friction généré au niveau d'une partie d'appui (21a-24a) qui maintient le galet rotatif (21-24 ; 121-124) de manière à pouvoir tourner sur l'élément de support (3) est conçu plus petit qu'un couple de friction généré au niveau d'une partie d'engrènement des filets (1a) sur la surface périphérique externe de la tige à crémaillère (1) et la gorge annulaire (21 b-24b) du galet rotatif (21-24 ; 121-124).

**3.** Mécanisme selon la revendication 1 ou 2,
**caractérisé en ce que**
un point d'approche maximale sur un axe de révolution du galet rotatif (21-24 ; 121-124) devant être défini comme un point proche d'un axe de tige à crémaillère (1d) qui est un axe de rotation de la tige à crémaillère (1) se trouve dans une position sensiblement centrale sur l'axe de révolution du galet rotatif (21-24 ; 121-124).

4. Mécanisme selon l'une quelconque des revendications 1 à 3,
**caractérisé en ce que**
une force d'entraînement de la source de courant rotative (5) est fournie à l'élément de support (3) pour faire tourner l'élément de support (3) afin d'entraîner la rotation de celui-ci par rapport à la tige à crémaillère (1).

5. Mécanisme selon l'une des revendications 1 à 4,
**caractérisé par**
un moyen d'ajustement d'angle axial (3c, 3d) qui peut ajuster l'angle biaxial après l'engrènement du galet rotatif (21-24 ; 121-124) avec la tige à crémaillère (1).

6. Mécanisme selon l'une quelconque des revendications 1 à 5,
**caractérisé en ce que**
au moins la ou les gorges annulaires (21b-24b) du ou des galets rotatifs (21-24 ; 121-124) sont formées en résine synthétique.

7. Mécanisme selon l'une quelconque des revendications 1 à 6,
**caractérisé en ce que**
le galet rotatif (12, 122, 123, 124) a une forme dont le diamètre externe augmente en s'éloignant des points d'approche maximale.

8. Mécanisme selon la revendication 4,
**caractérisé en ce que**
une partie de tuyau s'étend à partir de l'élément de support (3) afin de recouvrir la tige à crémaillère (1) et un moteur qui présente un évidement central (5) dont le rotor (5a) est fixé sur la partie de tuyau est fourni.

9. Mécanisme selon la revendication 6,
**caractérisé en ce que**
les gorges annulaires (21b-24b) sont formées en résine et l'intervalle entre les gorges annulaires adjacentes (21b-24b) est supérieur à la largeur des gorges annulaires (21b-24b).

10. Mécanisme selon la revendication 6,
**caractérisé en ce que**
une partie d'arbre du galet rotatif (21-24 ; 121-124) est formée en métal.

11. Mécanisme selon la revendication 6,
**caractérisé en ce que**
le galet rotatif (21-24 ; 121-124) est formé par un moulage, dans lequel un plan de séparation du moulage est situé sur un plan incluant l'axe du galet rotatif (21-24 ; 121-124).

# FIG. 1

EP 1 596 101 B1

# FIG. 2

21

A

21d

21a

21c

21b

A

21a

13

# FIG. 3

# FIG. 4

CLAMPED SURFACE OF CONNECTING
PARTS AND END PLATE

## FIG. 5

ROLLER GROOVE HAVING CENTER
AT POINT OF CLOSEST APPROACH

ROLLER GROOVE A

ROLLER GROOVE B

ROLLER GROOVE C

Y-AXIS

CENTER OF GROOVE c

CENTER OF GROOVE b

CENTER OF GROOVE a

POINT OF CLOSEST APPROACH

CENTER OF GROOVE A

ROLLER GROOVE a

ROLLER GROOVE b

ROLLER GROOVE c

CENTER OF GROOVE B

CENTER OF GROOVE C

3

ROLLER AXIS

REVOLVING ROLLER

DISTRIBUTION OF
LOCATIONS OF MESH

1

1a

1d

## FIG. 6

LOCATION OF BURR
DISTRIBUTION

OUTER PERIPHERAL PART
(FORMED FROM RESIN)

LEAD ANGLE OF RACK THREAD

21d

LOCATION OF MESH

REVOLVING ROLLER

21 ~ 24

SHAFT (FORMED
FROM METAL)

16

# FIG. 7

RACK THREAD RIDGE WHEN
REVOLVING ROLLER IS IN A POSITON

REVOLVING ROLLER GROOVE

RACK THREAD RIDGE WHEN
REVOLVING ROLLER IS IN B POSITON

REVOLVING ROLLER
A POSITION

$\delta \cdot$ RACK RADIUS $\cdot$ tan (LEAD
ANGLE OF RACK THREAD)

DIRECTION OF
RACK ROTATION

LEAD ANGLE OF
RACK THREAD

$\delta \cdot$ RACK RADIUS

DIRECTION
OF RACK
MOVEMENT

REVOLVING ROLLER
B POSITION

$\mathit{0}$ : LOCATION OF MESH

# FIG. 8

121,122,123,124

POINT OF CLOSEST APPROACH

121b,122b,123b,124b

# FIG. 9

POINT OF CLOSEST
APPROACH OF
REVOLVING ROLLER

PART OF REVOLV-
ING ROLLER

RACK THREAD RIDGE

RACK THREAD RIDGE

PART OF REVOLV-
ING ROLLER SHAFT

PART OF
REVOLVING
ROLLER
SHAFT

21

22

23

24

21

≡90°

≡90°

≡90°

≡90°

≡90°

POINT OF CLOSEST
APPROACH OF
REVOLVING ROLLER

PART OF REVOLV-
ING ROLLER

: ROLLER GROOVE

: HOLDER END PLATE

# FIG. 10

$\mu_b$: COEFFICIENT OF FRICTION OF BALL

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 7165049 A

- US 4838103 A